(19) Europäisches Patentamt

European Patent Office

Office européen des brevets

(11) **EP 1 246 035 A1**

(12) **DEMANDE DE BREVET EUROPEEN**

(43) Date de publication:
**02.10.2002 Bulletin 2002/40**

(51) Int Cl.7: **G05B 23/02**, F16K 37/00

(21) Numéro de dépôt: **01870067.4**

(22) Date de dépôt: **28.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **Techspace Aero S.A.**
**4041 Herstal (BE)**

(72) Inventeurs:
• **Promper, Christophe**
  **4800 Verviers (BE)**
• **Borbouse, Cédric**
  **4100 Seraing (BE)**

(74) Mandataire: **Van Malderen, Joelle et al**
**Office Van Malderen,**
**Boulevard de la Sauvenière, 85/043**
**4000 Liège (BE)**

(54) **Procédé et dispositif de commande d'un moteur électrique**

(57) La présente invention se rapporte à un dispositif de commande électronique d'un actionneur, de préférence électrique, comprenant un arbre de sortie soumis à un déplacement variable en fonction du temps, caractérisé en ce qu'il est muni de moyens pour assurer à tout instant un positionnement précis de l'arbre dans le temps en fonction d'une amplitude donnée dudit déplacement, le temps de déplacement étant compris entre une borne inférieure et une borne supérieure, lesdites bornes définissant un intervalle de tolérance, lesdits moyens limitant à une valeur maximale la puissance électrique consommée simultanément par ledit actionneur et ledit dispositif de commande.

FIG. 2

# EP 1 246 035 A1

## Description

### Objet de l'invention

La présente invention se rapporte à un dispositif de commande électronique d'un actionneur, de préférence électrique.

L'invention concerne également le procédé de régulation mis en oeuvre par le dispositif.

En particulier, l'invention se rapporte plus spécifiquement aux applications de positionnement d'une vanne dans le domaine spatial.

### Arrière-plan technologique et état de la technique

Actuellement, les spécifications techniques relatives à l'électronique de commande d'un actionneur électrique pour application spatiale portent essentiellement sur les paramètres suivants : la précision de positionnement autour de la valeur de consigne, le temps maximum de déplacement et la puissance électrique maximum, en valeur crête et moyenne.

Toutefois, ces spécifications techniques ne permettent pas de minimiser ou d'optimaliser la puissance électrique consommée par l'actionneur.

### Buts de l'invention

La présente invention vise à fournir un procédé de régulation utilisant des lois permettant d'obtenir des performances déterminées pour l'électronique de commande d'une vanne pour application de positionnement.

En particulier, l'invention a pour but d'obtenir des performances déterminées pour la vitesse et la précision de positionnement ainsi que pour la consommation de puissance électrique.

Un but complémentaire de l'invention est de fournir des lois de régulation pour un actionneur électrique en rotation ou déplacement linéaire.

### Principaux éléments caractéristiques de l'invention

La présente invention se rapporte à un dispositif de commande électronique d'un actionneur, de préférence électrique, comprenant un arbre de sortie soumis à un déplacement variable en fonction du temps, caractérisé en ce qu'il est muni de moyens pour assurer à tout instant un positionnement précis de l'arbre dans le temps en fonction d'une amplitude donnée dudit déplacement, le temps de déplacement étant compris entre une borne inférieure et une borne supérieure, lesdites bornes définissant un intervalle de tolérance, lesdits moyens limitant à une valeur maximale la puissance électrique consommée simultanément par ledit actionneur et ledit dispositif de commande.

De préférence, lesdits moyens minimisent ladite puissance électrique consommée.

Selon une forme d'exécution de l'invention, le déplacement de l'arbre est un déplacement linéaire.

Selon une autre forme d'exécution de l'invention, le déplacement de l'arbre est un déplacement angulaire.

Avantageusement, lesdits moyens comprennent des moyens logiciels mettant en oeuvre une loi de régulation imposant que le temps pour que l'actionneur réalise un déplacement linéaire ou angulaire d'amplitude donnée soit compris entre deux bornes, respectivement supérieure et inférieure.

De préférence, ledit déplacement linéaire ou angulaire est décomposé en une pluralité de déplacements linéaires ou angulaires de plus petite amplitude donnée et lesdits moyens comprennent des moyens logiciels mettant en oeuvre une loi de régulation imposant que chaque déplacement linéaire ou angulaire de plus petite amplitude donnée de l'arbre soit réalisé en un temps compris entre deux bornes, respectivement supérieure et inférieure.

Un autre aspect de la présente invention concerne un dispositif de commande électronique d'un actionneur, de préférence électrique, comprenant un arbre de sortie soumis à un déplacement variant en fonction du temps, caractérisé en ce qu'il est muni de moyens pour assurer à tout instant un positionnement précis de l'arbre en fonction du temps, l'amplitude dudit déplacement étant comprise entre une borne inférieure et une borne supérieure, lesdites bornes définissant l'intervalle de tolérance, lesdits moyens limitant à une valeur maximale la puissance électrique consommée simultanément par ledit actionneur et ledit dispositif de commande.

Selon une forme d'exécution de l'invention, ledit déplacement est un déplacement angulaire.

Selon une autre forme d'exécution de l'invention, ledit déplacement est un déplacement linéaire.

Avantageusement, lesdits moyens logiciels mettent en oeuvre une loi de régulation imposant que le déplacement linéaire ou angulaire de l'arbre soit réalisé en un temps tel que la position finale correspondante de l'arbre soit comprise entre deux bornes, respectivement supérieure et inférieure.

De préférence, ledit déplacement linéaire ou angulaire est décomposé en une pluralité de déplacements linéaires ou angulaires de plus petite amplitude, lesdits moyens logiciels mettant en oeuvre une loi de régulation imposant que chaque déplacement linéaire ou angulaire de plus petite amplitude de l'arbre soit réalisé en un temps tel que chaque position finale correspondante de l'arbre soit comprise entre deux bornes correspondantes, respectivement supérieure et inférieure.

La présente invention se rapporte également à un procédé de régulation électronique d'un actionneur comprenant un arbre de sortie soumis à un déplacement de préférence angulaire donné effectué en un certain temps et commandé par un dispositif électronique; caractérisé en ce qu'il comprend les étapes suivantes :

- on fixe une valeur requise de déplacement de préférence angulaire et une vitesse nominale constante de déplacement, ladite vitesse étant fonction du temps pour réaliser ledit déplacement;
- on calcule les bornes de l'intervalle de tolérance dans lequel doit se trouver le temps de déplacement respectivement supérieure et inférieure.

Un autre aspect de la présente invention se rapporte à un procédé de régulation électronique d'un actionneur comprenant un arbre de sortie soumis à un déplacement de préférence angulaire effectué en un temps déterminé et commandé par un dispositif électronique; caractérisé en ce qu'il comprend les étapes suivantes :

- on détermine, en imposant le temps de déplacement et une vitesse nominale constante qui est la vitesse moyenne pour ledit temps de déplacement, la position de préférence angulaire nominale qui est obtenue en fonction du temps,
- on impose que le déplacement angulaire total de l'arbre réalisé en un temps soit compris entre deux bornes, respectivement supérieure et inférieure définissant un intervalle de tolérance,
- on optimise les valeurs des paramètres de l'étape précédente de manière telle que des pics de consommation de puissance et la consommation globale de puissance, dans le cas le plus défavorable, soient minimisés, ladite puissance étant consommée simultanément par ledit actionneur et son dispositif de commande électronique.

Avantageusement, la deuxième étape consiste en une étape où ledit déplacement de préférence angulaire est décomposé en une pluralité de déplacements de préférence angulaires de plus petite amplitude et où on impose que chaque déplacement angulaire de plus petite amplitude de l'arbre soit réalisé en un temps tel que chaque position finale correspondante de l'arbre soit comprise entre deux bornes, respectivement supérieure et inférieure, définissant l'intervalle de tolérance intermédiaire.

Un autre aspect de la présente invention concerne une vanne à moteur électrique comprenant un actionneur commandé par un dispositif selon l'invention.

Un dernier aspect de la présente invention se rapporte à l'utilisation de ladite vanne pour le contrôle du point de fonctionnement d'un moteur de fusée à combustible liquide.

### Brève description des figures

La figure 1 représente la loi de déplacement angulaire de l'actionneur (papillon de vanne) en fonction du temps avec les deux bornes définissant l'intervalle de tolérance.

La figure 2 est une autre représentation de l'intervalle de tolérance.

### Description d'une forme d'exécution préférée de l'invention

L'invention permet une approche de précision de la position de l'actionneur à tout instant, tout en minimisant, autant que faire se peut, la puissance électrique consommée par la vanne et ses circuits de commande.

Dans le prolongement, l'invention consiste également en une nouvelle spécification technique dont le caractère innovant réside dans le fait qu'en plus des notions de précision, temps et puissance électrique, cette spécification impose un profil de déplacement pouvant être lui-même décomposé en une série de petits déplacements appartenant à d'autres profils de déplacement, en vue de minimiser la puissance électrique consommée par l'actionneur.

Selon une forme d'exécution préférée de l'invention, une ou plusieurs lois de déplacement sont imposées par un dispositif de contrôle électronique agissant sur l'arbre d'une vanne de régulation électrique tournante.

Cependant, l'invention n'est nullement limitée aux vannes à obturateurs rotatifs. Il peut également s'agir d'une vanne à clapet, où le mouvement de l'arbre est rendu linéaire, par exemple par l'adjonction d'organes de transmission, tel qu'une vis sans fin, entre le moteur tournant et l'arbre proprement dit. Il pourrait également s'agir d'un moteur rotatif dit "à rayon infini".

En particulier, la vanne électrique commandée par le dispositif de contrôle électronique (DCE) de l'invention est destinée au contrôle du point de fonctionnement de moteurs de fusée à carburant liquide.

Une définition typique d'une telle mission est :

- tests de validation du moteur, comprenant tests de la vanne intégrée au moteur, refroidissement du moteur (durée : entre 3 et 6 heures), test de mise à feu au sol (1000 s) et reconditionnement de 3 heures;
- reconfiguration du moteur avec tests spécifiques;
- transport du moteur de fusée;
- assemblage sur l'étage de fusée;
- transport de l'étage;
- assemblage final de la fusée;
- vol avec tests automatiques de vanne, refroidissement du moteur (3 heures) et vol proprement dit (1000 s).;
- si nécessaire, des tests spécifiques peuvent être répétés.

Le DCE doit être capable :

- de recevoir une position angulaire déterminée (de trois entrées indépendantes);
- d'être informé en permanence de la position angulaire de l'arbre de sortie ainsi que de sa vitesse de déplacement;
- de contrôler ladite position angulaire pour la fourniture de l'énergie électrique exactement nécessaire à l'arbre de sortie, en vue d'obtenir précisément ladite position angulaire;
- de gérer toute situation de panne électrique individuelle.

Les exigences de fonctionnement de l'actionneur (vanne) sont décrites ci-dessous.

*Performances dynamiques de l'actionneur dans l'espace $\tau$-$\Delta\theta$*

Selon l'invention, le temps $\tau$ pour que l'actionneur réalise un déplacement angulaire $\Delta\theta$ (en radians) est compris entre les deux bornes suivantes :

$$\tau_{sup}(\Delta\theta) = a_0 + k_{sup} \cdot (\Delta\theta)^n \tag{1}$$

$$\tau_{inf}(\Delta\theta) = a_0 + k_{inf} \cdot (\Delta\theta)^n \tag{2}$$

avec, à titre d'exemple, $k_{sup}$=0,48 sec, $k_{inf}$=0,50 sec, n=0,5 et $a_0$=0,01 sec.

Le coefficient $a_0$ correspond physiquement à un retard constant (temps de réaction, interfaces de communication, etc.).

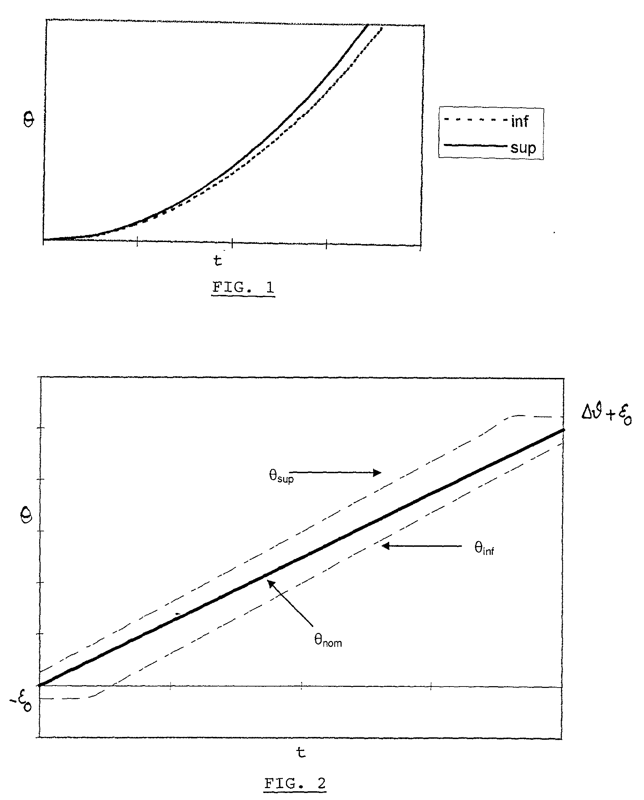

La valeur du déplacement angulaire en fonction du temps, correspondant à ces deux bornes est représentée à la figure 1.

*Précision angulaire (multipas)*

La vitesse nominale requise est une constante. Cette constante est la vitesse moyenne pour une durée de déplacement $\tau(\Delta\theta)$. La position angulaire au temps t est donnée par l'expression suivante (dite valeur nominale):

$$\theta_{nom}(t, \Delta\theta) = t.\Delta\theta/\tau(\Delta\theta) \tag{3}$$

Selon l'invention, tout déplacement angulaire doit se faire avec une précision telle qu'à tout moment, la position de l'arbre de sortie de l'actionneur soit comprise entre les deux bornes suivantes définissant l'intervalle de tolérance ($\theta_{inf} < \theta < \theta_{sup}$, Figure 2) :

$$\theta_{sup} = \min\{\varepsilon_0 + [\Delta\theta.(1+\lambda)-\varepsilon_0] .t/\tau(\Delta\theta) \; ; \; \Delta\theta + \varepsilon_0\} \tag{4};$$

$$\theta_{inf} = \max\{-\Delta\theta.\lambda + [\Delta\theta.(1+\lambda)-\varepsilon_0].t/\tau(\Delta\theta); \; -\varepsilon_0\} \tag{5};$$

où les deux paramètres de l'intervalle de tolérance sont la résolution angulaire $\varepsilon_0$, qui représente la précision du résolveur et du pilote électronique de l'actionneur, et le facteur d'erreur d'amplitude $\lambda$.

Par exemple, $\lambda$ vaut 5°/90° et $\varepsilon_0$ est le cumul de la précision absolue ($\pm$ 1°), la résolution ($\pm$ 0,3°) et la reproductibilité ($\pm$ 0,6°).

Selon une modalité encore préférée de l'invention, un déplacement angulaire donné se trouvant dans l'intervalle de tolérance peut être décomposé, au travers d'un certain nombre n d'étapes $S_i$ (i=1,...,n), en une pluralité de déplacements angulaires $\Delta\theta_i$ de plus petite amplitude, mais tels que chacun de ces déplacements doit être compris entre les deux bornes suivantes :

$$\theta_{sup,i} = \min\{\varepsilon_0+[\Delta\theta_i.(1+\lambda_i)-\varepsilon_0].t'/\tau_i;\ \Delta\theta_i+\varepsilon_0\} \tag{6};$$

$$\theta_{inf,i} = \max\{-\Delta\theta_i.\lambda_i+[\Delta\theta_i.(1+\lambda_i)-\varepsilon_0].t'/\tau_i\ ;\ -\varepsilon_0\} \tag{7};$$

où $\Delta\theta_i$ est le déplacement local, t' est le "temps de déplacement local" (= 0 au début du déplacement i), $\lambda_i$ est le facteur d'erreur locale d'amplitude et $\tau_i$ la durée du déplacement $S_i$.

Chacun de ces déplacements est effectué en optimisant les paramètres locaux, définis à l'étape précédente, de manière telle qu'on minimise la puissance électrique consommée, aussi bien de manière globale que pour les pics locaux de puissance, et ce dans le pire des cas (couple maximum). Cette optimisation est assurée par le DCE sur base d'un calcul de bilan énergétique.

*Réaction aux perturbations*

Celle-ci concerne la réponse à un pas de couple dont l'amplitude est $C_{step}$.

Le retard autorisé pour un changement (pas) de couple est donné par la loi suivante :

$$\varepsilon(t) < \max\ [(C_{step}/a).e^{-t/b},\ \varepsilon_0] \tag{8};$$

où $\varepsilon(t)$ est l'erreur angulaire par rapport à la valeur nominale $\theta_{nom}$, $\varepsilon_0$ est l'erreur de résolution (voir ci-dessus), $C_{step}$ = $C_{total}$ (Nm), a est un coefficient de résistance (1/5 x précision absolue), b une constante de temps (0,1 s) et t la durée depuis l'application du changement de couple.

## Revendications

1. Dispositif de commande électronique d'un actionneur, de préférence électrique, comprenant un arbre de sortie soumis à un déplacement variable en fonction du temps, **caractérisé en ce qu'**il est muni de moyens pour assurer à tout instant un positionnement précis de l'arbre dans le temps en fonction d'une amplitude donnée dudit déplacement, le temps de déplacement étant compris entre une borne inférieure et une borne supérieure, lesdites bornes définissant un intervalle de tolérance, lesdits moyens limitant à une valeur maximale la puissance électrique consommée simultanément par ledit actionneur et ledit dispositif de commande.

2. Dispositif selon la revendication 1, **caractérisé en ce que** lesdits moyens minimisent ladite puissance électrique consommée.

3. Dispositif selon la revendication 1 ou 2, **caractérisé en ce que** le déplacement de l'arbre est un déplacement linéaire.

4. Dispositif selon la revendication 1 ou 2, **caractérisé en ce que** le déplacement de l'arbre est un déplacement angulaire.

5. Dispositif selon l'une quelconque des revendications précédentes, **caractérisé en ce que** lesdits moyens comprennent des moyens logiciels mettant en oeuvre une loi de régulation imposant que le temps ($\tau$) pour que l'actionneur réalise un déplacement linéaire ou angulaire d'amplitude donnée ($\Delta\theta$) soit compris entre deux bornes, respectivement supérieure ($\tau_{sup}(\Delta\theta)$) et inférieure ($\tau_{inf}(\Delta\theta)$).

**6.** Dispositif selon la revendication 5, **caractérisé en ce que** ledit déplacement linéaire ou angulaire est décomposé en une pluralité (N) de déplacements linéaires ou angulaires de plus petite amplitude donnée, lesdits moyens logiciels mettant en oeuvre une loi de régulation imposant que chaque déplacement linéaire ou angulaire de plus petite amplitude donnée de l'arbre ($\Delta\theta_i$, i=1...N) soit réalisé en un temps ($\tau_i$, i=1...N) compris entre deux bornes correspondantes, respectivement supérieure ($\tau_{sup,i}$) et inférieure ($\tau_{inf,i}$).

**7.** Dispositif selon la revendication 5 ou 6, **caractérisé en ce que** lesdites bornes de temps, respectivement supérieure ($\tau_{sup}(\Delta\theta_i)$) et inférieure ($\tau_{inf}(\Delta\theta_i)$), sont données par les relations :

$$\tau_{sup,i}(\Delta\theta_i) = a_0 + k_{sup} \cdot (\Delta\theta_i)^n;$$

$$\tau_{inf,i}(\Delta\theta_i) = a_0 + k_{inf} \cdot (\Delta\theta_i)^n;$$

où $a_0$, $k_{inf}$, $k_{sup}$ et n sont des constantes.

**8.** Dispositif de commande électronique d'un actionneur, de préférence électrique, comprenant un arbre de sortie soumis à un déplacement variant en fonction du temps, **caractérisé en ce qu'**il est muni de moyens pour assurer à tout instant un positionnement précis de l'arbre en fonction du temps, l'amplitude dudit déplacement étant comprise entre une borne inférieure et une borne supérieure, lesdites bornes définissant l'intervalle de tolérance, lesdits moyens limitant à une valeur maximale la puissance électrique consommée simultanément par ledit actionneur et ledit dispositif de commande.

**9.** Dispositif selon la revendication 8, **caractérisé en ce que** ledit déplacement est un déplacement angulaire.

**10.** Dispositif selon la revendication 8, **caractérisé en ce que** ledit déplacement est un déplacement linéaire.

**11.** Dispositif selon l'une quelconque des revendications 8 à 10, **caractérisé en ce que** lesdits moyens comprennent des moyens logiciels mettant en oeuvre une loi de régulation imposant que le déplacement linéaire ou angulaire de l'arbre ($\Delta\theta$) est réalisé en un temps ($\tau$) tel que la position linéaire ou angulaire finale correspondante de l'arbre soit comprise entre deux bornes, respectivement supérieure ($\theta_{sup}$) et inférieure ($\theta_{inf}$).

**12.** Dispositif selon la revendication 11, **caractérisé en ce que** ledit déplacement linéaire ou angulaire est décomposé en une pluralité (N) de déplacements linéaires ou angulaires de plus petite amplitude, lesdits moyens logiciels mettant en oeuvre une loi de régulation imposant que chaque déplacement linéaire ou angulaire de plus petite amplitude de l'arbre ($\Delta\theta_i$, i=1...N) soit réalisé en un temps ($\tau_i$, i=1...N)) tel que chaque position finale correspondante de l'arbre soit comprise entre deux bornes correspondantes, respectivement supérieure ($\theta_{sup,i}$) et inférieure ($\theta_{inf,i}$).

**13.** Dispositif selon la revendication 11 ou 12, **caractérisé en ce que** lesdites bornes, respectivement supérieure ($\theta_{sup,i}$) et inférieure ($\theta_{inf,i}$) sont données par les relations :

$$\theta_{sup,i} = \min\{\varepsilon_0 + [\Delta\theta_i \cdot (1+\lambda_i) - \varepsilon_0] \cdot t'/\tau_i;\ \Delta\theta_i + \varepsilon_0\};$$

$$\theta_{inf,i} = \max\{-\Delta\theta_i \cdot \lambda_i + [\Delta\theta_i \cdot (1+\lambda_i) - \varepsilon_0] \cdot t'/\tau_i;\ -\varepsilon_0\};$$

où t' est le temps de déplacement local et $\lambda_i$ est un facteur d'erreur d'amplitude local.

**14.** Procédé de régulation électronique d'un actionneur comprenant un arbre de sortie soumis à un déplacement de préférence angulaire donné ($\Delta\theta$) effectué en un certain temps ($\tau$) et commandé par un dispositif électronique; **caractérisé en ce qu'**il comprend les étapes suivantes :

- on fixe une valeur requise de déplacement de préférence angulaire ($\Delta\theta$) et une vitesse nominale constante de déplacement , ladite vitesse étant fonction du temps ($\tau$) pour réaliser ledit déplacement;
- on calcule les bornes de l'intervalle de tolérance dans lequel doit se trouver le temps de déplacement ($\tau$), respectivement supérieure, ($\tau_{sup,i}$) et inférieure ($\tau_{inf,i}$), de préférence par les relations :

$$\tau_{sup,i}(\Delta\theta_i) = a_0 + k_{sup}.(\Delta\theta_i)^n;$$

$$\tau_{inf,i}(\Delta\theta_i) = a_0 + k_{inf}.(\Delta\theta_i)^n;$$

où $a_0$, $k_{inf}$, $k_{sup}$ et n sont des constantes.

**15.** Procédé de régulation électronique d'un actionneur comprenant un arbre de sortie soumis à un déplacement de préférence angulaire ($\Delta\theta$) effectué en un temps déterminé ($\tau$) et commandé par un dispositif électronique; **caractérisé en ce qu'**il comprend les étapes suivantes :

- on détermine, en imposant le temps de déplacement ($\tau$) et une vitesse nominale constante qui est la vitesse moyenne ($\Delta\theta/\tau_{(\Delta\theta)}$) pour ledit temps de déplacement, la position nominale qui est obtenue en fonction du temps (t) par l'expression :

$$\theta_{nom}(t, \Delta\theta) = t.\Delta\theta/\tau_{(\Delta\theta)} \ (0 \le t \le \tau);$$

- on impose que le déplacement de préférence angulaire total de l'arbre ($\Delta\theta$) réalisé en un temps ($\tau$) soit compris entre deux bornes, respectivement supérieure ($\theta_{sup}$) et inférieure ($\theta_{inf}$) définissant l'intervalle de tolérance ($\theta_{inf} < \Delta\theta < \theta_{sup}$) et de préférence données par les relations :

$$\theta_{sup} = \min\{\varepsilon_0 + [\Delta\theta.(1+\lambda)-\varepsilon_0]. \ t/\tau(\Delta\theta); \ \Delta\theta+\varepsilon_0\};$$

$$\theta_{inf} = \max\{-\Delta\theta.\lambda+[\Delta\theta.(1+\lambda)-\varepsilon_0].t/\tau(\Delta\theta); \ -\varepsilon_0\};$$

où $\varepsilon_0$ est un facteur de résolution angulaire et $\lambda$ un facteur d'erreur d'amplitude;
- on optimise les valeurs des paramètres de l'étape précédente de manière telle que des pics de consommation de puissance et la consommation globale de puissance, dans le cas le plus défavorable, sont minimisés, ladite puissance étant consommée simultanément par ledit actionneur et son dispositif de commande électronique.

**16.** Procédé de régulation selon la revendication 15, **caractérisé en ce que** la deuxième étape consiste en une étape où ledit déplacement de préférence angulaire est décomposé en une pluralité (N) de déplacements de préférence angulaires de plus petite amplitude et où on impose que chaque déplacement de préférence angulaire de plus petite amplitude de l'arbre ($\Delta\theta_i$, i=1...N) soit réalisé en un temps ($\tau_i$, i=1...N)) tel que la position angulaire correspondante de l'arbre soit comprise entre deux bornes, respectivement supérieure ($\theta_{sup,i}$) et inférieure ($\theta_{inf,i}$), définissant l'intervalle de tolérance intermédiaire ($\theta_{inf,i} < \Delta\theta_i < \theta_{sup,i}$), de préférence données par les relations :

$$\theta_{sup,i} = \min\{\varepsilon_0+[\Delta\theta_i.(1+\lambda_i)-\varepsilon_0].t'/\tau_i; \ \Delta\theta_i+\varepsilon_0\} \ ;$$

$$\theta_{inf,i} = \max\{-\Delta\theta_i.\lambda_i+[\Delta\theta_i.(1+\lambda_i)-\varepsilon_0].t'/\tau_i; \ -\varepsilon_0\};$$

où t' est le temps de déplacement local et $\lambda_i$ (i=1...N) est un facteur d'erreur d'amplitude local.

**17.** Vanne à moteur électrique comprenant un actionneur commandé par un dispositif de commande électronique selon l'une quelconque des revendications 1 à 13.

**18.** Utilisation d'une vanne selon la revendication 17, pour le contrôle du point de fonctionnement d'un moteur de fusée à combustible liquide.

FIG. 1

FIG. 2

Office européen
des brevets

**RAPPORT DE RECHERCHE EUROPEENNE**

Numéro de la demande

EP 01 87 0067

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 864 949 A (SIEMENS AUTOMOTIVE S.A.) 16 septembre 1998 (1998-09-16) * colonne 1, ligne 42 - colonne 2, ligne 13 * * colonne 2, ligne 25 - colonne 4, ligne 34; figures 1,2 * --- | 1,8 | G05B23/02 F16K37/00 |
| A | US 5 210 476 A (KAZATO) 11 mai 1993 (1993-05-11) * abrégé * * colonne 1, ligne 12 - colonne 2, ligne 31 * * colonne 3, ligne 1 - colonne 4, ligne 42; figures 1-7 * --- | 1,8 | |
| A | US 5 966 679 A (SNOWBARGER ET AL.) 12 octobre 1999 (1999-10-12) * abrégé * * colonne 1, ligne 66 - colonne 2, ligne 50 * * colonne 4, ligne 12 - colonne 5, ligne 38 * * colonne 5, ligne 51 - colonne 6, ligne 59 * * colonne 7, ligne 13 - colonne 10, ligne 7; figures 1-3 * ----- | 1,8 | |

| DOMAINES TECHNIQUES RECHERCHES (Int.Cl.7) |
|---|
| G05B B25J F16K F02K G05D |

Le présent rapport a été établi pour toutes les revendications

| Lieu de la recherche | Date d'achèvement de la recherche | Examinateur |
|---|---|---|
| BERLIN | 3 septembre 2001 | Beitner, M |

## ANNEXE AU RAPPORT DE RECHERCHE EUROPEENNE
## RELATIF A LA DEMANDE DE BREVET EUROPEEN NO.

EP 01 87 0067

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-09-2001

| Document brevet cité au rapport de recherche | | Date de publication | Membre(s) de la famille de brevet(s) | | Date de publication |
|---|---|---|---|---|---|
| EP 864949 | A | 16-09-1998 | FR | 2760862 A | 18-09-1998 |
| US 5210476 | A | 11-05-1993 | JP | 4054885 A | 21-02-1992 |
| | | | DE | 69124848 D | 10-04-1997 |
| | | | DE | 69124848 T | 09-10-1997 |
| | | | EP | 0462539 A | 27-12-1991 |
| US 5966679 | A | 12-10-1999 | US | 5687098 A | 11-11-1997 |
| | | | AU | 9569598 A | 23-04-1999 |
| | | | BR | 9812405 A | 19-09-2000 |
| | | | CN | 1278930 T | 03-01-2001 |
| | | | EP | 1019790 A | 19-07-2000 |
| | | | WO | 9917177 A | 08-04-1999 |
| | | | AU | 7520196 A | 22-05-1997 |
| | | | BR | 9611405 A | 28-12-1999 |
| | | | CA | 2236257 A | 09-05-1997 |
| | | | CN | 1200817 A | 02-12-1998 |
| | | | DE | 69613234 D | 12-07-2001 |
| | | | EP | 0858625 A | 19-08-1998 |
| | | | JP | 11514761 T | 14-12-1999 |
| | | | WO | 9716776 A | 09-05-1997 |

EPO FORM P0460